# EUROPÄISCHE PATENTSCHRIFT

(11) **EP 3 241 654 B1**
(45) Veröffentlichungstag und Bekanntmachung des Hinweises auf die Patenterteilung: **02.03.2022**
(21) Anmeldenummer: 17167890.7
(22) Anmeldetag: 25.04.2017
(51) Int. Cl.: B25F 5/02

(54) **HANDWERKZEUGMASCHINE UND VERFAHREN MIT EINER HANDWERKZEUGMASCHINE**
MACHINE TOOL AND METHOD WITH A MACHINE TOOL
MACHINE-OUTIL PORTATIVE ET PROCÉDÉ FAISANT APPEL À UNE MACHINE-OUTIL PORTATIVE

(30) Priorität: 04.05.2016 DE 102016207706
(43) Veröffentlichungstag der Anmeldung: 08.11.2017
(73) Patentinhaber: Robert Bosch GmbH, 70442 Stuttgart (DE)
(72) Erfinder: Schadow, Joachim, 70563 Stuttgart (DE); Katzenberger, Steffen, 75446 Wiernsheim (DE); Esenwein, Florian, 70771 Leinfelden-Echterdingen (DE); Stock, Joern, 70711 Leinfelden-Echterdingen (DE)

(56) Entgegenhaltungen:
- EP-A1- 1 319 477
- EP-A1- 1 440 771
- DE-A1-102010 032 351
- FR-A1- 2 955 515
- GB-A- 2 410 205
- US-A1- 2014 165 796

## Beschreibung

Die vorliegende Erfindung bezieht sich auf ein Verfahren gemäß dem Oberbegriff des Anspruchs 1. Ein solches Verfahren ist aus der EP 1 440 771 A1 bekannt.

### Stand der Technik

Es ist bereits ein Akkuschrauber mit einer Drehzahl- und Drehrichtungsregelung vorgeschlagen worden, welcher über Bewegungs- und Beschleunigungssensoren verfügt, mittels derer eine Bewegung des Akkuschraubers durch einen Benutzer erkannt und die Drehzahl- bzw. Drehrichtungsregelung entsprechend angesteuert werden kann. Ferner ist eine Bohrmaschine mit einem Sensor vorgeschlagen worden, welcher eine Überwachung eines auftretendes Bohr-/Schraubdrehmoments ermöglicht. Ein Schraub- oder Bohrvorgang kann dann bei Überschreiten eines Grenzwerts abgebrochen werden.

### Offenbarung der Erfindung

Die Erfindung betrifft ein Verfahren gemäß dem Anspruch 1. Vorteilhafte Ausgestaltungen der Erfindung werden durch die abhängige Ansprüche definiert.

Unter einer "Handwerkzeugmaschine" soll in diesem Zusammenhang insbesondere eine werkstückbearbeitende Maschine, vorteilhaft jedoch eine Bohrmaschine, ein Bohr- und/oder Schlaghammer, ein Meißelhammer, eine Säge, ein Hobel, ein Schrauber, ein Elektroschraubenzieher, eine Fräse, ein Schleifer und/oder ein Winkelschleifer, und/oder ein Gartengerät, insbesondere eine Rebschere und/oder eine Heckenschere, und/oder ein Multifunktionswerkzeug verstanden werden.

Unter einem "Griffbereich" soll in diesem Zusammenhang insbesondere ein dreidimensionaler Bereich verstanden werden, innerhalb dessen zumindest ein Teil, ein Bauteil, eine Baugruppe, eine Einheit und/oder ein Element der Handwerkzeugmaschine angeordnet ist. Beispielsweise kann zumindest ein Griffelement der Handwerkzeugmaschine innerhalb des Griffbereichs angeordnet sein. Der Griffbereich kann eine Vielzahl von, insbesondere unzusammenhängenden oder zusammenhängenden, Teilbereichen umfassen. Beispielsweise kann die Handwerkzeugmaschine zumindest zwei verschiedene Griffelemente aufweisen, die in zumindest zwei verschiedenen Teilbereichen des Griffbereichs angeordnet sind. Insbesondere kann auch ein Teil eines Gehäuses der Handwerkzeugmaschine, der zu einem Halten durch einen Benutzer vorgesehen ist, innerhalb des Griffbereichs angeordnet sein. Es ist denkbar, dass zumindest ein Volumen und/oder eine Form zumindest eines Teilbereichs des Griffbereichs mit einem Volumen zumindest eines in dem Griffbereich angeordneten Griffelements identisch ist. Vorzugsweise weist die Handwerkzeugmaschine zumindest ein Handgriffelement mit zumindest einer Weichkomponente, insbesondere einem thermoplastischen Elastomer, auf, das innerhalb des Griffbereichs angeordnet ist. Besonders bevorzugt wird das Handgriffelement zu wenigstens einem Großteil von der Weichkomponente ausgebildet. Unter dem Ausdruck "zu wenigstens einem Großteil" soll dabei insbesondere zu wenigstens 55 %, vorteilhaft zu wenigstens 65 %, vorzugsweise zu wenigstens 75 %, besonders bevorzugt zu wenigstens 85 % und besonders vorteilhaft zu wenigstens 95 % verstanden werden. Vorzugsweise definiert der Griffbereich zumindest eine Griffoberfläche, welche insbesondere zumindest teilweise mit einer Oberfläche des Handgriffelements identisch ist.

Unter einer "Sensoreinheit" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Unter einem "Sensorsignal" soll in diesem Zusammenhang insbesondere eine vorteilhaft elektronische Größe verstanden werden, welche die Kenngröße und/oder die physikalische Eigenschaft repräsentiert und vorteilhaft elektronisch übermittelbar ist, insbesondere an und/oder zu einer Verarbeitung durch die Steuereinheit.

Unter einem "Berührparameter" soll in diesem Zusammenhang insbesondere zumindest ein Resultat zumindest eines messbaren Einwirkens des Benutzers, vorteilhaft zumindest eines Teils zumindest einer Hand des Benutzers, beispielsweise eines Berührens und/oder eines Greifens und/oder eines Drückens und/oder eines Ziehens verstanden werden. Insbesondere kann der Berührparameter ein Halteparameter und/oder ein Wirkparameter und/oder eine Kraft und/oder eine Dehnung sein.

Unter einer "Steuereinheit" soll insbesondere eine elektrische und/oder elektronische Einheit mit zumindest einer Steuerelektronik verstanden werden. Unter einer "Steuerelektronik" soll insbesondere eine Einheit mit einer Recheneinheit und mit einer Speichereinheit sowie mit einem in der Speichereinheit gespeicherten Betriebs-, Steuer- und/oder Regelprogramm, welches insbesondere dazu vorgesehen ist, von der Recheneinheit ausgeführt zu werden, verstanden werden.

Unter einer "Antriebseinheit" soll in diesem Zusammenhang insbesondere eine Einheit verstanden werden, die dazu vorgesehen ist, zumindest ein Antriebsmoment zu erzeugen und zur Weiterleitung insbesondere an ein Einsatzwerkzeug zur Verfügung zu stellen. Vorteilhaft weist die Handwerkzeugmaschine die Antriebseinheit auf. Besonders vorteilhaft weist die Antriebseinheit zumindest einen Elektromotor auf. Vorzugsweise ist die Antriebseinheit dazu vorgesehen, zumindest ein Einsatzwerkzeug, beispielsweise einen Bohrer und/oder ein Werkzeugbit und/oder ein Schneidblatt und/oder eine Schleifscheibe und/oder ein Scherblatt oder dergleichen, und/oder zumindest eine Werkzeugaufnahme, beispielsweise ein Spannfutter und/oder eine Sägeblattaufnahme und/oder einen Bithalter oder dergleichen, der Handwerkzeugmaschine anzutreiben und/oder in Bewegung zu versetzen.

Unter einer "Antriebskenngröße" soll in diesem Zusammenhang insbesondere ein insbesondere von einem Ein- und/oder Abschalt- und/oder Standby-Zustand verschiedener Parameter verstanden werden, der einen Betriebszustand einer Antriebseinheit kennzeichnet, beispielsweise eine Drehzahl und/oder ein Drehmoment und/oder eine Drehrichtung und/oder eine Antriebskraft und/oder eine Aktivierungspulslänge und/oder eine Leistung oder dergleichen. Unter einem "Antriebskenngrößenwert" soll insbesondere ein bestimmter Wert verstanden werden, der innerhalb eines Bereichs von Werten liegt, welche die Antriebskenngröße annehmen kann und welchen die Antriebskenngröße vorteilhaft in zumindest einem Betriebszustand annimmt. Vorzugsweise ist die Steuereinheit dazu vorgesehen, die Antriebskenngröße kontinuierlich und/oder sprunghaft zu verändern. Insbesondere sind der erste Antriebskenngrößenwert und der zweite Antriebskenngrößenwert unterschiedlich.

Durch die erfindungsgemäße Ausgestaltung der Handwerkzeugmaschine können vorteilhafte Eigenschaften hinsichtlich einer Bedienbarkeit erzielt werden. Vorteilhaft kann eine intuitive Bedienung ermöglicht werden. Ferner können Bedienfehler vorteilhaft vermieden oder zumindest reduziert werden. Außerdem kann eine hohe Sicherheit erzielt werden. Vorteilhaft können Bedienfehler und/oder deren Folgen vermieden werden. Weiterhin kann ein hoher Bedienkomfort erzielt werden. Vorteilhaft kann eine Handwerkzeugmaschine bereitgestellt werden, welche eine Benutzerbewegung insbesondere in einer intuitiven Weise unterstützt.

Vorteilhaft sind der erste Antriebskenngrößenwert und der zweite Antriebskenngrößenwert von Null verschieden. Insbesondere ist die Steuereinheit zur einer von einem Einschalten, einem Ausschalten, einem Aktivieren aus einem Standby-Modus und/oder einem Versetzen in einen Standby-Modus der Antriebseinheit und/oder der Handwerkzeugmaschine verschiedenen Veränderung der Antriebskenngröße vorgesehen. Vorteilhaft ist die Steuereinheit zusätzlich zu einem Aktivieren oder Deaktivieren der Antriebseinheit vorgesehen, beispielsweise in Abhängigkeit von einem anderen Berührparameter.

Erfindungsgemäß weist die Handwerkzeugmaschine ein Griffbereich auf, wobei der Griffbereich zumindest ein eine Weichkomponente aufweisendes Handgriffelement umfasst, wobei der zumindest eine Griffbereich zumindest eine Sensoreinheit zu einer Erfassung eines Differenzvolumens bei einer Verformung der Weichkomponente des Handgriffelements von einem unverformten Zustand in einen verformten Zustand umfasst und die Verformung eine bei einer Drehbewegung der Handwerkzeugmaschine durch den Benutzer entstehende Scherverformung infolge einer Scherung der Weichkomponente des zumindest einen Handgriffelements ist und wobei die Sensoreinheit eine aus der Scherverformung resultierende Scherkraft als Berührparameter erfasst.

Vorteilhaft ist die Verformung eine makroskopische Verformung, wobei insbesondere ein aus dem Griffbereich in einem unverformten Zustand und aus dem Griffbereich in einem verformten Zustand gebildetes Differenzvolumen wenigstens 1 mm³, vorteilhaft wenigstens 2 mm³ und besonders vorteilhaft wenigstens 5 mm³ beträgt. Vorzugsweise ist die Steuereinheit dazu vorgesehen, die Antriebskenngröße lediglich bei Überschreiten einer bestimmten Grenzverformung zu verändern. Hierdurch kann vorteilhaft eine Ansteuerung unmittelbar auf eine Benutzerhandlung wie beispielsweise ein festes Halten hin erfolgen.

Erfindungsgemäß ist die Verformung eine Scherverformung. Besonders vorteilhaft umfasst die Verformung eine Verschiebung einer insbesondere einer Hand des Benutzers bei einem Halten zugewandten Oberseite des Handgriffelements relativ zu einer insbesondere der Oberseite abgewandten Unterseite des Handgriffelements. Hierdurch kann vorteilhaft eine von einem Benutzer ausgeübte Drehbewegung unterstützt und/oder in ein Antriebsmoment übersetzt werden. Erfindungsgemäß wird es vorgeschlagen, dass der Berührparameter eine auf den Griffbereich wirkende Scherkraft umfasst. Vorzugsweise ist das Handgriffelement durch die Kraft makroskopisch verformbar ausgebildet. Unter einem "makroskopisch verformbaren Objekt" soll dabei insbesondere ein Objekt verstanden werden, dessen Erstreckung entlang zumindest einer Richtung durch einen wirkenden Druck von höchstens 100 kN mm⁻², vorteilhaft von höchstens 10 kN mm⁻² und besonders vorteilhaft von höchstens 1 kN mm⁻² um wenigstens 1 %, vorteilhaft um wenigstens 5 %, besonders vorteilhaft um wenigstens 20 % und bevorzugt um wenigstens 50 % verändert werden kann, insbesondere beschädigungs- und/oder zerstörungsfrei. Hierdurch kann vorteilhaft eine Betätigung durch eine intuitive Handlung eines Benutzers gesteuert werden.

In einer besonders bevorzugten Ausgestaltung der Erfindung wird vorgeschlagen, dass die Kraft eine, insbesondere das Handgriffelement scherende, Scherkraft ist. Insbesondere existiert zumindest eine auf den Griffbereich wirkende weitere Kraft, welche parallel zu der Kraft in eine entgegengesetzte Richtung steht und an einem anderen Punkt des Griffbereichs ansetzt als die Kraft. Insbesondere setzt die Kraft an einer Oberseite des Griffelements und/oder setzt die weitere Kraft an einer Unterseite des Griffelements an. Alternativ oder zusätzlich kann der Berührparameter eine Druckkraft umfassen, welche insbesondere zumindest im Wesentlichen senkrecht zu der Kraft und/oder zumindest im Wesentlichen senkrecht zu der Oberfläche des Handgriffelements verläuft. Unter "zumindest im Wesentlichen senkrecht" soll hier insbesondere eine Ausrichtung einer Richtung relativ zu einer Bezugsrichtung, insbesondere in einer Bezugsebene, verstanden werden, wobei die Richtung und die Bezugsrichtung einen Winkel einschließen, der insbesondere weniger als 8°, vorteilhaft weniger als 5° und besonders vorteilhaft weniger als 2° von einem rechten Winkel abweicht. Erfindungsgemäß ist die Kraft eine bei einer Drehbewegung auftretende Scherkraft, beispielsweise bei einer Drehbewegung insbesondere des Gehäuses der Handwerkzeugmaschine relativ zu einem Werkstück, wie etwa bei einem Schrauben. Hierdurch kann vorteilhaft eine Unterstützung einer Benutzerhandlung und/oder eine Betätigung auf eine Benutzerhandlung hin, vorteilhaft in intuitiver Weise, ermöglicht werden.

Vorzugsweise ist die Steuereinheit dazu vorgesehen, eine auf den Griffbereich wirkende Kraft, insbesondere eine Druck- und/oder eine Scherkraft, und/oder eine Verformung des Griffbereichs, insbesondere des Handgriffelements, anhand des Sensorsignals zu bestimmen.

Ein intuitives Betätigungs- und/oder Regelverhalten einer Antriebseinheit kann erzielt werden, wenn die Steuereinheit in zumindest einem Betriebszustand die Antriebskenngröße monoton steigend, insbesondere proportional, zu der Kraft steuert.

In einer vorteilhaften Ausgestaltung der Erfindung wird vorgeschlagen, dass die Sensoreinheit zu einer zumindest teilweisen orts- und/oder zeitaufgelösten Erfassung des Berührparameters vorgesehen ist. Vorzugsweise ist die Steuereinheit dazu vorgesehen, einen zeit- und/oder ortsabhängigen Verlauf der auf den Griffbereich wirkenden Kraft aus dem Sensorsignal zu bestimmen. Hierdurch kann vorteilhaft eine hohe Genauigkeit hinsichtlich einer Bestimmung und/oder einer Überwachung eines Benutzerverhaltens ermöglicht werden.

In einer besonders vorteilhaften Ausgestaltung der Erfindung wird vorgeschlagen, dass die Steuereinheit dazu vorgesehen ist, zumindest einen Sicherheitsstatus des Benutzers zumindest anhand des Sensorsignals zu ermitteln. Beispielsweise kann der Sicherheitsstatus eine Benutzungsberechtigung und/oder ein Ausbildungsgrad und/oder ein Alter sein. Vorteilhaft ist die Steuereinheit zur Ermittlung des Sicherheitsstatus dazu vorgesehen, anhand des Sensorsignals ein Greifverhalten und/oder eine Haltekraft und/oder eine Bedienkraft und/oder eine Handgröße und/oder eine Greifposition des Benutzers zu bestimmen. Vorzugsweise ist die Steuereinheit dazu vorgesehen, in Abhängigkeit von dem Sicherheitsstatus des Benutzers eine Aktivierung der Antriebseinheit zu verhindern und/oder die Antriebseinheit zu deaktivieren und/oder eine Aktivierung der Antriebseinheit zu ermöglichen und/oder auszulösen und/oder beizubehalten. Hierdurch kann vorteilhaft eine hohe Sicherheit erzielt und/oder eine unberechtigte und/oder fehlerhafte Benutzung vermieden werden.

In einer weiteren Ausgestaltung der Erfindung wird vorgeschlagen, dass die Sensoreinheit zu einer Erfassung wenigstens einer Benutzergeste vorgesehen ist. Insbesondere umfasst die Benutzergeste zumindest eine Berührung des Griffbereichs, vorzugsweise eine Berührung der Oberfläche des Handgriffelements. Vorteilhaft umfasst die Benutzergeste zumindest eine Hand- und/oder Fingerbewegung, beispielsweise eine Dreh- und/oder Wischbewegung. Vorzugsweise ist die Sensoreinheit dazu vorgesehen, einen mit der Benutzergeste verbundenen weiteren Berührparameter des Griffbereichs gleichzeitig mit dem Berührparameter zu erfassen. Besonders bevorzugt ist die Steuereinheit dazu vorgesehen, ein mit dem weiteren Berührparameter verbundenes weiteres Sensorsignal parallel zu dem Sensorsignal zu verarbeiten. Insbesondere ist die Steuereinheit dazu vorgesehen, aus dem Sensorsignal ein Greifverhalten des Benutzers und/oder aus dem weiteren Sensorsignal die Benutzergeste zu ermitteln. Hierdurch kann vorteilhaft ein sicherer und/oder intuitiver Einhandbetrieb ermöglicht werden. Ferner kann hierdurch ein hoher Bedienkomfort und/oder eine intuitive Bedienbarkeit erzielt werden.

Ferner wird vorgeschlagen, dass die Steuereinheit dazu vorgesehen ist, infolge der Benutzergeste zumindest eine weitere Funktion anzusteuern. Beispielsweise kann es sich bei der Funktion um eine Betriebsmodusauswahl und/oder um eine Drehzahlregelung und/oder um eine Drehrichtungsauswahl und/oder eine Kraftbegrenzungseinstellung und/oder eine Ladezustandsabfrage und/oder eine Parameterabfrage handeln. Vorteilhaft ist die Steuereinheit dazu vorgesehen, infolge verschiedener Benutzergesten verschiedene Funktionen anzusteuern. Hierdurch kann eine schnelle und vielseitige Bedienbarkeit ermöglicht werden.

Außerdem wird vorgeschlagen, dass die Sensoreinheit zumindest ein in zumindest einem insbesondere an den Griffbereich angrenzenden Nahbereich des Griffbereichs angeordnetes Sensorarray aufweist. Insbesondere weist ein am weitesten von dem Griffbereich entfernter Punkt des Nahbereichs des Griffbereichs einen Abstand von höchstens 2 cm, vorteilhaft von höchstens 1 cm, besonders vorteilhaft von höchstens 0,5 cm und vorzugsweise von höchstens 0,2 cm auf. Insbesondere weist das Sensorarray eine Dicke von höchstens 10 mm, vorteilhaft von höchstens 6 mm und besonders vorteilhaft von höchstens 3 mm auf. Vorteilhaft ist das Sensorarray insbesondere unmittelbar unterhalb des Griffbereichs angeordnet. Es ist auch denkbar, dass das Sensorarray zumindest teilweise innerhalb des Griffbereichs angeordnet ist. Bevorzugt weist das Sensorarray zumindest einen Sensorpixel auf, der zu einer Erfassung zumindest eines Teilparameters des Berührparameters an zumindest einem bestimmten Ort vorgesehen ist. Besonders bevorzugt weist das Sensorarray eine Vielzahl von Sensorpixeln für die ortsaufgelöste Erfassung des Berührparameters auf. Vorteilhaft weist die Sensoreinheit verschiedene Sensorarrays auf, die besonders vorteilhaft in verschiedenen Nahbereichen verschiedener Griffbereiche angeordnet sind. Insbesondere in diesem Fall kann die Steuereinheit dazu vorgesehen sein, verschiedene Funktionen in Abhängigkeit verschiedener Sensorarraysignale der verschiedenen Sensorarrays anzusteuern. Ferner ist denkbar, dass die Sensoreinheit zumindest ein Sensorarray aufweist, welches in einem von einem Griffbereich verschiedenen Bedienbereich angeordnet ist, beispielsweise auf zumindest einer Gehäuseseite. Hierdurch kann eine genaue Erfassung eines Berührparameters eines Griffbereichs ermöglicht werden. Ferner kann hierdurch vorteilhaft ein Ort einer Benutzerberührung und/oder einer Benutzerbetätigung ermittelt werden.

Vorzugsweise definiert das Sensorarray zumindest eine gekrümmte Sensoroberfläche. Vorzugsweise ist die Sensoroberfläche an einer Gehäuseoberfläche angeordnet. Besonders vorteilhaft entspricht die Sensoroberfläche zumindest einer Teilfläche der Oberfläche des Haltegriffelements. Bevorzugt folgt eine Form der Sensoroberfläche einer Form des Haltegriffelements und/oder des Gehäuses. Hierdurch können vorteilhafte Eigenschaften hinsichtlich einer Integration von Sensoren erzielt werden. Ferner kann hierdurch eine Gestalt eines Sensorarrays variabel angepasst werden.

In einer weiteren Ausgestaltung der Erfindung wird vorgeschlagen, dass die Handwerkzeugmaschine zumindest eine in einem Nahbereich des Sensorarrays angeordnete Bilderzeugungseinheit aufweist. Insbesondere weist die Bilderzeugungseinheit zumindest eine Bildfläche auf, die mit der Sensoroberfläche zumindest abschnittsweise identisch ist und/oder zumindest abschnittsweise parallel zu der Sensoroberfläche verläuft. Vorzugsweise weist die Bilderzeugungseinheit zumindest ein Display auf, welches gemeinsam mit zumindest einem Sensorarray der Sensoreinheit zumindest einen Touchscreen ausbildet. Vorteilhaft ist die Steuereinheit dazu vorgesehen, zumindest eine Information mittels der Bilderzeugungseinheit darzustellen, beispielsweise einen Ladezustand und/oder eine Drehzahl und/oder eine Betriebsmodusauswahl und/oder eine Parameterinformation. Hierdurch kann vorteilhaft ein Benutzer schnell und zuverlässig über einen Betriebsstatus informiert werden. Ferner kann hierdurch ein hoher Bedienkomfort und/oder eine intuitive Bedienbarkeit ermöglicht werden.

Ferner geht die Erfindung aus von einem Verfahren mit einer Handwerkzeugmaschine mit zumindest einem Griffbereich.

Es wird vorgeschlagen, dass zumindest eine Antriebskenngröße einer Antriebseinheit von wenigstens einem ersten Antriebskenngrößenwert zu wenigstens einem zweiten Antriebskenngrößenwert in Abhängigkeit von einem von einem Benutzer hervorgerufenen Berührparameter des Griffbereichs verändert wird.

Durch ein erfindungsgemäßes Verfahren können vorteilhafte Eigenschaften hinsichtlich einer Bedienbarkeit erzielt werden. Vorteilhaft kann eine intuitive Bedienung ermöglicht werden. Ferner können Bedienfehler vorteilhaft vermieden oder zumindest reduziert werden. Außerdem kann eine hohe Sicherheit erzielt werden. Vorteilhaft können Bedienfehler und/oder deren Folgen vermieden werden. Weiterhin kann ein hoher Bedienkomfort erzielt werden. Vorteilhaft kann eine Handwerkzeugmaschine bereitgestellt werden, welche eine Benutzerbewegung insbesondere in einer intuitiven Weise unterstützt.

Die erfindungsgemäße Handwerkzeugmaschine soll hierbei nicht auf die oben beschriebene Anwendung und Ausführungsform beschränkt sein. Insbesondere kann die erfindungsgemäße Handwerkzeugmaschine zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erste Handwerkzeugmaschine in einer perspektivischen Darstellung,
- Fig. 2: die erste Handwerkzeugmaschine in einer schematischen Schnittdarstellung,
- Fig. 3: die erste Handwerkzeugmaschine in einer weiteren perspektivischen Darstellung,
- Fig. 4: eine zweite Handwerkzeugmaschine in einer schematischen Seitenansicht,
- Fig. 5: eine dritte Handwerkzeugmaschine in einer perspektivischen Darstellung und
- Fig. 6: eine vierte Handwerkzeugmaschine in einer schematischen Seitenansicht.

### Beschreibung der Ausführungsbeispiele

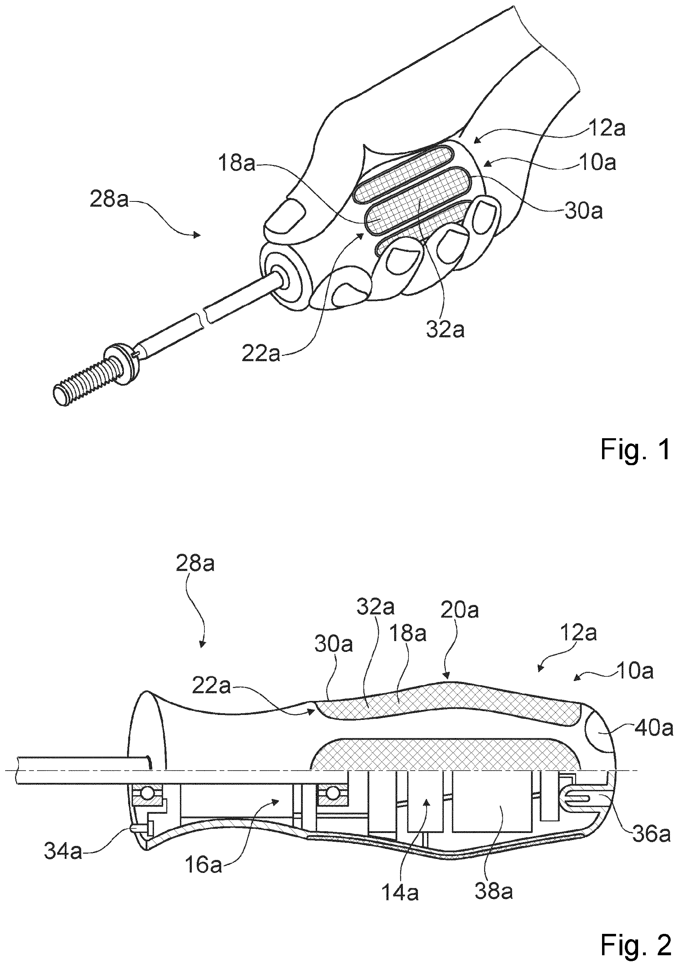

Die Figur 1 zeigt eine erste Handwerkzeugmaschine 28a in einer perspektivischen Darstellung. Die Figur 2 zeigt die erste Handwerkzeugmaschine 28a in einer schematischen Schnittdarstellung. Im vorliegenden Fall ist die erste Handwerkzeugmaschine 28a als ein Elektroschraubendreher ausgebildet. Die erste Handwerkzeugmaschine 28a ist dazu vorgesehen, einen Benutzer bei einem Schrauben zu unterstützen. Insbesondere ist die erste Handwerkzeugmaschine 28a dazu vorgesehen, ein unterstützendes Drehmoment bedarfsweise zu erzeugen. Die erste Handwerkzeugmaschine 28a weist zumindest einen Griffbereich 10a auf. Die erste Handwerkzeugmaschine 28a weist eine Antriebseinheit 16a auf. Die Antriebseinheit 16a ist im vorliegenden Fall als ein Elektromotor ausgebildet. Die erste Handwerkzeugmaschine 28a weist zumindest eine Sensoreinheit 12a auf, die zu einer Erfassung zumindest eines von einem Benutzer hervorgerufenen Berührparameters des Griffbereichs 10a vorgesehen ist. Die erste Handwerkzeugmaschine 28a weist zumindest eine Steuereinheit 14a auf, die zu einer Veränderung zumindest einer Antriebskenngröße der Antriebseinheit 16a von wenigstens einem ersten Antriebskenngrößenwert zu wenigstens einem zweiten Antriebskenngrößenwert wenigstens in Abhängigkeit von zumindest einem Sensorsignal der Sensoreinheit 12a vorgesehen ist.

Die erste Handwerkzeugmaschine 28a weist ein Handgriffelement 30a auf, welches innerhalb des Griffbereichs 10a angeordnet ist. Das Handgriffelement 30a ist aus einer Weichkomponente ausgebildet. Im vorliegenden Fall ist die Weichkomponente transparent ausgebildet. Es sind aber auch opake, insbesondere farbige Weichkomponenten denkbar. Im vorliegenden Fall weist die erste Handwerkzeugmaschine 28a mehrere Handgriffelemente 30a auf, die aus Gründen einer Übersichtlichkeit nicht alle mit Bezugszeichen versehen sind. Der Griffbereich 10a beinhaltet im vorliegenden Fall genau alle Handgriffelemente 30a der ersten Handwerkzeugmaschine 28a. Ein Volumen und eine Form des Griffbereichs 10a entsprechen einem Volumen und einer Form einer Gesamtheit der Handgriffelemente 30a der Handwerkzeugmaschine 28a. Der Griffbereich 10a ist zu einem Halten durch eine Hand des Benutzers vorgesehen.

Die Antriebskenngröße ist im vorliegenden Fall ein bereitgestelltes Antriebsmoment der Antriebseinheit 16a. Erkennt die Steuereinheit 14a anhand des Sensorsignals einen veränderten Bedarf eines unterstützenden Drehmoments, welches dem Benutzer bei einem Schrauben zusätzlich zu einem von dem Benutzer selbst aufgebrachten Drehmoment von der Antriebseinheit 16a zur Verfügung gestellt wird, verändert die Steuereinheit 14a die Antriebskenngröße entsprechend, beispielsweise zu einem größeren Antriebskenngrößenwert bei einem größeren Bedarf an Drehmoment.

Der erste Antriebskenngrößenwert und der zweite Antriebskenngrößenwert können dabei insbesondere beide von Null verschieden sein. Beispielsweise kann die Antriebseinheit 16a bei einem Einschrauben einer Schraube in ein Material ein bestimmtes unterstützendes Drehmoment erzeugen, was einem bestimmten von Null verschiedenen ersten Antriebskenngrößenwert entspricht. Erhöht sich ein Bedarf an Drehmoment, beispielsweise weil sich eine Materialhärte ändert, kann die Steuereinheit 14a die Antriebskenngröße auf einen zweiten von Null verschiedenen Antriebskenngrößenwert erhöhen.

Im vorliegenden Fall umfasst der Berührparameter eine Verformung des Griffbereichs 10a. Insbesondere umfasst der Berührparameter eine Verformung des Handgriffelements 30a. Die Verformung ist eine Scherverformung. Im vorliegenden Fall wird das Handgriffelement 30a und insbesondere der Griffbereich 10a durch ein Greifen und Drehen des Benutzers geschert. Der Berührparameter umfasst eine auf den Griffbereich 10a wirkende Kraft. Im vorliegenden Fall ist die Kraft eine Scherkraft, welche eine Scherung des Handgriffelements 30a hervorruft.

Die Steuereinheit 14a steuert die Antriebskenngröße in zumindest einem Betriebszustand monoton steigend, insbesondere proportional, zu der Kraft. Übt der Benutzer, beispielsweise aufgrund des härteren Materials, ein größeres Drehmoment aus, erzeugt er damit eine größere Kraft, insbesondere Scherkraft, welche auf den Griffbereich 10a wirkt. Durch eine Anpassung der Antriebskenngröße kann dann ein größeres unterstützendes Drehmoment von der Antriebseinheit 16a erzeugt werden. Ferner steuert die Steuereinheit 14a die Antriebskenngröße monoton fallend im Fall einer sinkenden Kraft.

Die Sensoreinheit 12a ist zu einer zumindest teilweisen orts- und zeitaufgelösten Erfassung des Berührparameters vorgesehen. Es ist aber auch denkbar, dass eine Sensoreinheit entweder zu einer orts- oder zu einer zeitaufgelösten Erfassung eines Berührparameters vorgesehen ist. Die Steuereinheit 14a ist dazu vorgesehen, aus dem Sensorsignal einen zeitabhängigen und ortsabhängigen Verlauf der auf den Griffbereich 10a wirkenden Kraft zu ermitteln. Aus diesem Verlauf kann insbesondere ein Benutzerverhalten bestimmt werden. Beispielsweise können wiederkehrende Kraftprofile erkannt und die Antriebskenngröße entsprechend angepasst werden. Die Sensoreinheit 12a ist im vorliegenden Fall ferner dazu vorgesehen, eine Richtung der Kraft zu erfassen, insbesondere ortsaufgelöst.

Die Sensoreinheit 12a weist zumindest ein in zumindest einem Nahbereich 22a des Griffbereichs 10a angeordnetes Sensorarray 18a auf. Im vorliegenden Fall ist das Sensorarray 18a unmittelbar unterhalb des Handgriffelements 30a angeordnet. Das Sensorarray 18a weist im vorliegenden Fall eine Dicke von etwa 2 mm auf. Das Sensorarray 18a definiert zumindest eine gekrümmte Sensoroberfläche 20a. Die Sensoroberfläche 20a entspricht im vorliegenden Fall einer Oberfläche des Handgriffelements 30a. Das Sensorarray 18a weist eine Vielzahl von Sensorpixeln 32a auf, die aus Gründen einer Übersichtlichkeit nicht alle mit Bezugszeichen versehen sind. Eine Gesamtheit an Sensorpixeln 32a ist zu einer ortsaufgelösten Erfassung des Berührparameters vorgesehen.

Die erste Handwerkzeugmaschine 28a weist ein Beleuchtungselement 34a auf. Das Beleuchtungselement 34a ist im vorliegenden Fall eine Weißlichtdiode. Ferner weist die erste Handwerkzeugmaschine 28a einen Steckkontakt 36a auf, über welchen ein Energiespeicher 38a der Handwerkzeugmaschine 28a aufgeladen werden kann. Weiterhin weißt die erste Handwerkzeugmaschine 28a einen Schalter 40a auf, der zu einem Einschalten und Ausschalten der Antriebseinheit 16a, der Steuereinheit 14a und der Sensoreinheit 12a vorgesehen ist.

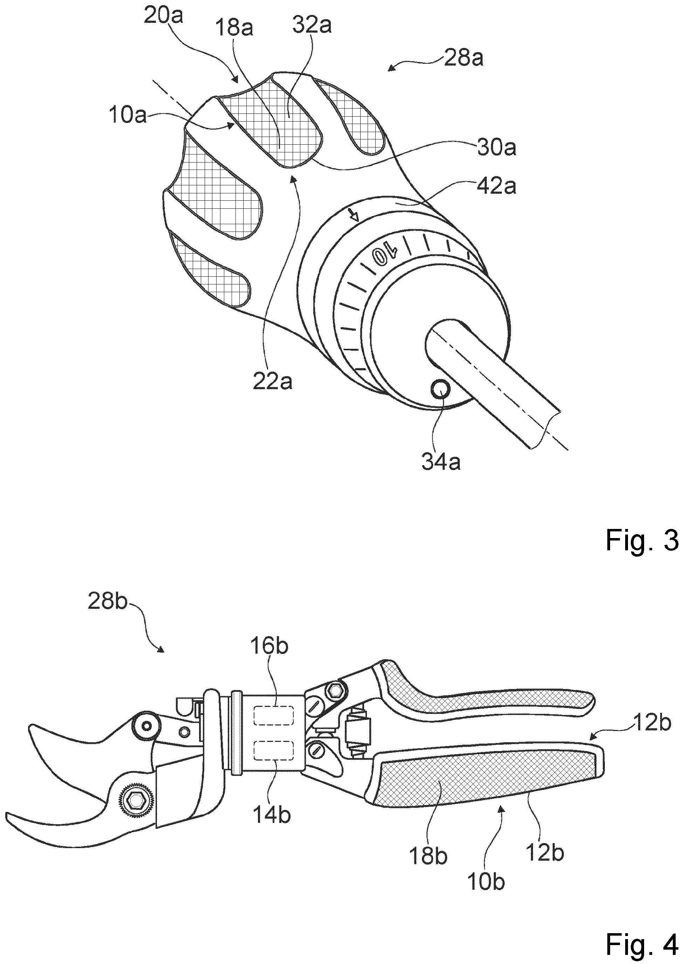

Die Figur 3 zeigt die erste Handwerkzeugmaschine 28a in einer weiteren perspektivischen Darstellung. Die erste Handwerkzeugmaschine 28a weist einen Verstellring 42a auf. Der Verstellring 42a ist dazu vorgesehen, ein Steuerverhalten der Steuereinheit 14a einzustellen. Insbesondere kann mittels des Verstellrings 42a eingestellt werden, in welchem Umfang die Antriebseinheit 16a in Abhängigkeit von dem Berührparamter ein unterstützendes Drehmoment zur Verfügung stellen soll.

In den Figuren 4 bis 6 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 6 ist der Buchstabe a durch die Buchstaben b bis d ersetzt.

Die Figur 4 zeigt eine zweite Handwerkzeugmaschine 28b in einer schematischen Seitenansicht. Die zweite Handwerkzeugmaschine 28b ist als eine Rebschere ausgebildet.

Die zweite Handwerkzeugmaschine 28b weist einen Griffbereich 10b und eine Sensoreinheit 12b auf, die zu einer Erfassung zumindest eines von einem Benutzer hervorgerufenen Berührparameters vorgesehen ist. Die zweite Handwerkzeugmaschine 28b weist eine Steuereinheit 14b auf, die zu einer Veränderung zumindest einer Antriebskenngröße einer Antriebseinheit 16b von wenigstens einem ersten Antriebskenngrößenwert zu wenigstens einem zweiten Antriebskenngrößenwert wenigstens in Abhängigkeit von zumindest einem Sensorsignal der Sensoreinheit 12b vorgesehen ist.

Der Berührparameter ist eine auf den Griffbereich 10b wirkende Kraft. Greift der Benutzer die zweite Handwerkzeugmaschine 28b in dem Griffbereich 10b, beispielsweise um einen Ast abzutrennen, übt er eine Druckkraft auf den Griffbereich 10b aus. Ein Betrieb der Antriebseinheit 16b ist durch eine bestimmte Antriebskenngröße gekennzeichnet, im vorliegenden Fall durch eine bestimmte Schneidkraft. Die Steuereinheit 14b verändert die Antriebskenngröße in Abhängigkeit von der Druckkraft, um eine entsprechende Unterstützung für den Benutzer zur Verfügung zu stellen.

Die Sensoreinheit 12b weist ein Sensorarray 18b auf, welches zu einer orts- und zeitabhängigen Erkennung des Berührparameters vorgesehen ist. Die Steuereinheit 14b ist dazu vorgesehen, zumindest einen Sicherheitsstatus des Benutzers zumindest anhand des Sensorsignals zu ermitteln. Im vorliegenden Fall ermittelt die Steuereinheit 14b anhand des Sensorsignals ein ortsaufgelöstes Griffbild des Benutzers. Das Griffbild umfasst Informationen wenigstens über eine Haltekraft und/oder eine Handgröße des Benutzers, aus welchen der Sicherheitsstatus ermittelt wird. Die Steuereinheit 14b gibt einen Betrieb der Antriebseinheit 16b lediglich frei, wenn der Benutzer einen hinreichenden Sicherheitsstatus hat. Weist die ermittelte Handgröße beispielsweise darauf hin, dass ein Kleinkind die zweite Handwerkzeugmaschine 28b hält und/oder weist die ermittelte Haltekraft auf ein unzureichend festes Halten hin, wird ein Betrieb der Antriebseinheit 16b verunmöglicht.

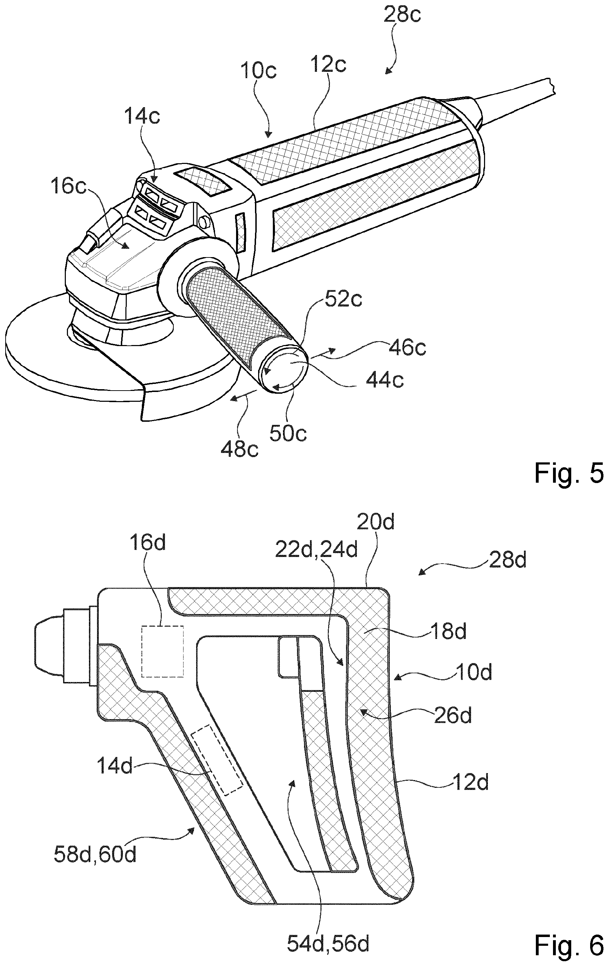

Die Figur 5 zeigt eine dritte Handwerkzeugmaschine 28c in einer perspektivischen Darstellung. Die dritte Handwerkzeugmaschine 28c ist als ein Winkelschleifer ausgebildet.

Die dritte Handwerkzeugmaschine 28c weist einen Griffbereich 10c und eine Sensoreinheit 12c auf, die zu einer Erfassung zumindest eines von einem Benutzer hervorgerufenen Berührparameters vorgesehen ist. Die dritte Handwerkzeugmaschine 28c weist eine Steuereinheit 14c auf, die zu einer Veränderung zumindest einer Antriebskenngröße einer Antriebseinheit 16c von wenigstens einem ersten Antriebskenngrößenwert zu wenigstens einem zweiten Antriebskenngrößenwert wenigstens in Abhängigkeit von zumindest einem Sensorsignal der Sensoreinheit 12c vorgesehen ist.

Analog zu den Ausführungsbeispielen der Figuren 1 bis 4 erfolgt eine Anpassung eines Betriebs der Antriebseinheit 16c an ein Benutzerverhalten. Insbesondere wird ein sicheres Halten des Griffbereichs 10c anhand des Sensorsignals ermittelt.

Die dritte Handwerkzeugmaschine 28c weist einen Zusatzhandgriff 44c auf. Der Zusatzhandgriff 44c kann arretiert werden. In einem unarretierten Zustand kann der Zusatzhandgriff 44c in verschiedene Richtungen 46c, 48c, 50c, 52c bewegt werden. Es ist aber auch denkbar, dass ein Zusatzhandgriff stets in verschiedene Richtungen bewegbar ausgebildet ist. Mittels gezielter Bewegung in zumindest eine der Richtungen 46c, 48c, 50c, 52c, insbesondere in Kombination mit einem bestimmten Halteverhalten des Griffbereichs 10c des Benutzers, können verschiedene Betriebsmodi ausgewählt und/oder Zusatzfunktionen aufgerufen werden.

Die Figur 6 zeigt eine vierte Handwerkzeugmaschine 28d in einer perspektivischen Darstellung. Die vierte Handwerkzeugmaschine 28d ist als ein Bohrhammer ausgebildet.

Die vierte Handwerkzeugmaschine 28d weist einen Griffbereich 10d und eine Sensoreinheit 12d auf, die zu einer Erfassung zumindest eines von einem Benutzer hervorgerufenen Berührparameters vorgesehen ist. Die vierte Handwerkzeugmaschine 28d weist eine Steuereinheit 14d auf, die zu einer Veränderung zumindest einer Antriebskenngröße einer Antriebseinheit 16d von wenigstens einem ersten Antriebskenngrößenwert zu wenigstens einem zweiten Antriebskenngrößenwert wenigstens in Abhängigkeit von zumindest einem Sensorsignal der Sensoreinheit 12d vorgesehen ist.

Die Sensoreinheit 12d weist ein in einem Nahbereich 22d des Griffbereichs 10d angeordnetes Sensorarray 18d auf, das zu einer orts- und zeitaufgelösten Erfassung des Berührparameters vorgesehen ist. Das Sensorarray 18d definiert eine gekrümmte Sensoroberfläche 20d. Der Berührparameter ist im vorliegenden Fall eine Berührung der Sensoroberfläche 20d. Die Sensoreinheit 12d ist zu einer Erfassung wenigstens einer Benutzergeste vorgesehen. Eine Ortsauflösung und eine Berührempfindlichkeit des Sensorarrays 18d sind hinreichend hoch, um Benutzergesten wie beispielsweise ein Streichen oder ein Wischen oder ein Drücken auf die Sensoroberfläche 20d erfassen zu können.

Die Steuereinheit 14d ist dazu vorgesehen, aus den Sensorsignalen eine Berührkraft sowie ein Berührmuster zu ermitteln. Ferner kann die Steuereinheit 14d aus dem Berührmuster die Benutzergeste ermitteln. Die Steuereinheit 14d ist dazu vorgesehen, infolge der Benutzergeste zumindest eine weitere Funktion anzusteuern. Im vorliegenden Fall kann durch ein Malen eines Kreises auf die Sensoroberfläche 20d in eine bestimmte Richtung eine Drehrichtung der Antriebseinheit 16d verändert werden. Ferner kann mittels Benutzergesten ein Drehmoment und/oder eine Drehzahl der Antriebseinheit 16d eingestellt werden. Weiterhin sind andere abrufbare Funktionen denkbar. Beispielsweise kann eine Handwerkzeugmaschine über entsprechende Schnittstellen zur insbesondere drahtlosen Verbindung mit einem zentralen Server verfügen, über welchen Informationen beziehbar und/oder an welchen Informationen übermittelbar sind, beispielsweise Informationen über einen Betriebszustand, eine Umgebung, einen Wartungszustand, eine geeignete Werkzeugauswahl oder dergleichen.

Die vierte Handwerkzeugmaschine 28d weist eine in dem Nahbereich 24d des Sensorarrays 18d angeordnete Bilderzeugungseinheit 26d auf. Die Bilderzeugungseinheit 26d ist als ein LCD-Display ausgebildet. Eine Bilderzeugungseinheit kann aber beispielsweise auch als ein OLED-Display ausgebildet sein. Die Bilderzeugungseinheit 26d und das Sensorarray 18d bilden gemeinsam einen insbesondere mit und ohne Handschuhen bedienbaren Touchscreen aus. Mittels einer Kombination der Bilderzeugungseinheit 26d und des Sensorarrays 18d können Benutzergesten und -handlungen erkannt sowie Informationen an den Benutzer weitergegeben werden.

Die vierte Handwerkzeugmaschine 28d weist im vorliegenden Fall mehrere Griffbereiche 10d, 54d, 58d mit Sensorarrays 18d, 56d, 60d auf. Aus dem Sensorsignal der Sensoreinheit 12d kann die Steuereinheit 14d ein Griffbild des Benutzers erkennen. Beispielsweise kann bei einem Umgreifen eine Änderung der Drehrichtung oder eines anderen Parameters erfolgen. Ferner kann analog zu den Ausführungsbeispielen der Figuren 1 bis 5 ein Sicherheitsstatus des Benutzers abgefragt werden.

## Patentansprüche

1. Verfahren zum Betreiben einer Handwerkzeugmaschine (28a) mit zumindest einem Griffbereich (10a), wobei der Griffbereich (10a) zumindest ein eine Weichkomponente aufweisendes Handgriffelement (30a) umfasst, wobei zumindest eine Antriebskenngröße einer Antriebseinheit (16a) der Handwerkzeugmaschine (28a) von wenigstens einem ersten Antriebskenngrößenwert zu wenigstens einem zweiten Antriebskenngrößenwert in Abhängigkeit von einem von einem Benutzer hervorgerufenen Berührparameter des Griffbereichs (10a) mittels zumindest einer Steuereinheit (14a) verändert wird, **dadurch gekennzeichnet, dass** der zumindest eine Griffbereich (10a) zumindest eine Sensoreinheit (12a) zu einer Erfassung eines Differenzvolumens bei einer Verformung der Weichkomponente des Handgriffelements (30a) von einem unverformten Zustand in einen verformten Zustand umfasst und die Verformung eine bei einer Drehbewegung der Handwerkzeugmaschine (28a) durch den Benutzer entstehende Scherverformung infolge einer Scherung der Weichkomponente des zumindest einen Handgriffelements (30a) ist und dass die Sensoreinheit (12a) eine aus der Scherverformung resultierende Scherkraft als Berührparameter erfasst.

2. Verfahren nach Anspruch 1, **dadurch gekennzeichnet, dass** der erste Antriebskenngrößenwert und der zweite Antriebskenngrößenwert von Null verschieden sind.

3. Verfahren nach Anspruch 1, **dadurch gekennzeichnet, dass** die Steuereinheit (14a) in zumindest einem Betriebszustand die Antriebskenngröße monoton steigend zu der Scherkraft steuert.

4. Verfahren nach einem der vorhergehenden Ansprüche, **dadurch gekennzeichnet, dass** die Sensoreinheit (12a) zu einer zumindest teilweisen orts- und/oder zeitaufgelösten Erfassung des Berührparameters vorgesehen ist.

5. Verfahren nach einem der vorhergehenden Ansprüche, **dadurch gekennzeichnet, dass** die Sensoreinheit (12a) zumindest ein in zumindest einem Nahbereich (22a) des Griffbereichs (10a) angeordnetes Sensorarray (18a) aufweist.

6. Verfahren nach Anspruch 5, **dadurch gekennzeichnet, dass** das Sensorarray (18a) zumindest eine gekrümmte Sensoroberfläche (20a) definiert.

## Claims

1. Method for operating a handheld power tool (28a) with at least one grip region (10a), wherein the grip region (10a) comprises at least one handle element (30a) having a soft component, wherein at least one drive characteristic variable of a drive unit (16a) of the handheld power tool (28a) is changed from at least one first drive characteristic variable value to at least one second drive characteristic variable value depending on a contact parameter, caused by a user, of the grip region (10a) by means of at least one control unit (14a), **characterized in that** the at least one grip region (10a) comprises at least one sensor unit (12a) for detecting a difference in volume in the event of a deformation of the soft component of the handle element (30a) from an undeformed state to a deformed state and the deformation is a shearing deformation, produced in the event of a rotational movement of the handheld power tool (28a) by the user, resulting from shearing of the soft component of the at least one handle element (30a), and **in that** the sensor unit (12a) detects a shearing force, resulting from the shearing deformation, as the contact parameter.

2. Method according to Claim 1, **characterized in that** the first drive characteristic variable value and the second drive characteristic variable value are different from zero.

3. Method according to Claim 1, **characterized in that** the control unit (14a) controls the drive characteristic variable in a monotonically increasing manner in relation to the shearing force in at least one operating state.

4. Method according to one of the preceding claims, **characterized in that** the sensor unit (12a) is provided for at least partial spatially and/or temporally resolved detection of the contact parameter.

5. Method according to one of the preceding claims, **characterized in that** the sensor unit (12a) has at least one sensor array (18a) arranged in at least one near region (22a) of the grip region (10a).

6. Method according to Claim 5, **characterized in that** the sensor array (18a) defines at least one curved sensor surface (20a).

## Revendications

1. Procédé de fonctionnement d'un outil électrique à main (28a) comprenant au moins une zone de préhension (10a), la zone de préhension (10a) comprenant au moins un élément de préhension (30a) qui comporte un composant souple, au moins un paramètre d'entraînement d'une unité d'entraînement (16a) de l'outil électrique à main (28a) étant modifié d'au moins une première valeur de paramètre d'entraînement à au moins une deuxième valeur de paramètre d'entraînement en fonction d'un paramètre tactile de la zone de préhension (10a), qui est généré par un utilisateur, au moyen d'au moins une unité de commande (14a), **caractérisé en ce que** l'au moins une zone de préhension (10a) comprend au moins une unité de détection (12a) destinée à détecter un volume de différence lorsque le composant souple de l'élément de préhension (30a) se déforme d'un état non déformé à un état déformé, et la déformation est une déformation par cisaillement générée par l'utilisateur lorsque l'outil électrique à main (28a) se déplace en rotation et due au cisaillement du composant souple de l'au moins un élément de préhension (30a) et **en ce que** l'unité de détection (12a) détecte comme paramètre tactile une force de cisaillement résultant de la déformation de cisaillement.

2. Procédé selon la revendication 1, **caractérisé en ce que** la première valeur de paramètre d'entraînement et la deuxième valeur de paramètre d'entraînement sont différentes de zéro.

3. Procédé selon la revendication 1, **caractérisé en ce que**, dans au moins un état de fonctionnement, l'unité de commande (14a) commande le paramètre d'entraînement de manière croissante et monotone par rapport à la force de cisaillement.

4. Procédé selon l'une des revendications précédentes, **caractérisé en ce que** l'unité de détection (12a) est prévue pour détecter le paramètre tactile au moins partiellement avec résolution spatiale et/ou temporelle.

5. Procédé selon l'une des revendications précédentes, **caractérisé en ce que** l'unité de détection (12a) comporte au moins un réseau de capteurs (18a) disposé dans au moins un voisinage (22a) de la zone de préhension (10a).

6. Procédé selon la revendication 5, **caractérisé en ce que** le réseau de capteurs (18a) définit au moins une surface de détection incurvée (20a).
